# EUROPÄISCHE PATENTSCHRIFT

(11) **EP 2 850 338 B1**
(45) Veröffentlichungstag und Bekanntmachung des Hinweises auf die Patenterteilung: **17.04.2019**
(21) Anmeldenummer: 13721345.0
(22) Anmeldetag: 08.05.2013
(51) Int. Cl.: F16F 15/14

(54) **FLIEHKRAFTPENDEL**
CENTRIFUGAL-FORCE PENDULUM
PENDULE CENTRIFUGE

(30) Priorität: 16.05.2012 DE 102012208273
(43) Veröffentlichungstag der Anmeldung: 25.03.2015
(73) Patentinhaber: Schaeffler Technologies AG & Co. KG, 91074 Herzogenaurach (DE)
(72) Erfinder: RUSCH, Alain, F-67840 Kilstett (FR)
(86) Internationale Anmeldenummer: PCT/EP2013/059548
(87) Internationale Veröffentlichungsnummer: WO 2013/171103

(56) Entgegenhaltungen:
- DE-A1-102011 105 029
- US-A- 2 387 776

## Beschreibung

Die Erfindung betrifft ein Fliehkraftpendel insbesondere in einer Kupplungsscheibe einer Reibungskupplung mit einem um eine Drehachse drehenden Pendelflansch und einer Mehrzahl gegenüber diesem entlang eines Schwingwinkels verschwenkbaren, beidseitig des Pendelflanschs angeordneten Pendelmassen, wobei jeweils axial gegenüber liegende Pendelmassen mittels den Pendelflansch durchgreifender Abstandshalter zu einem Pendelmassenpaar verbunden sind und der Schwingwinkel mittels jeweils zwei durch Laufbahnen in den Pendelmassen und in dem Pendelflansch sowie jeweils einem auf diesen abwälzenden Wälzkörper gebildeten Schwenklagern eingestellt ist.

Fliehkraftpendel sind als drehzahladaptive Schwingungstilger zur Isolation von Drehschwingungen von Brennkraftmaschinen in Antriebssträngen von Kraftfahrzeugen bekannt. Hierbei sind an einem von der Brennkraftmaschine drehangetriebenen Bauteil wie Pendelflansch Pendelmassen angeordnet, die auf Laufbahnen gegenüber der Pendelmasse aufgenommen und fliehkraftbedingt in einer vorgegebenen Position gehalten sind und abhängig von eingetragenen Drehschwingungsanregungen entlang eines Schwingwinkels verlagert werden, so dass sich das Trägheitsmoment des Fliehkraftpendels abhängig von der Drehzahl und den eingetragenen Drehschwingungen ändert. Die Resonanzfrequenz des Fliehkraftpendels ist dabei auf eine Schwingungsordnung der Brennkraftmaschine ausgelegt. Aus der DE 10 2009 021 355 A1 ist ein Fliehkraftpendel mit beidseitig an einem Pendelflansch angeordneten Pendelmassen bekannt, das in eine Kupplungsscheibe integriert ist. Hierbei sind aus dem Pendelflansch und den Pendelmassen Ausnehmungen zur Darstellung der Laufbahnen ausgenommen. Weiterhin sind jeweils sich beidseitig des Pendelflansches gegenüberliegende Pendelmassen mittels Abstandshaltern zu Pendelmassenpaaren verbunden, welche zusätzlich für die den Pendelflansch durchgreifenden Abstandshalter auf den Schwingwinkel angepasste Ausnehmungen aufweisen. Bei einer entsprechend hohen Anzahl von beispielsweise vier über den Umfang angeordneten Pendelmassenpaaren sind die Mindestquerschnitte zwischen den Ausnehmungen gering und nur unter hohem Aufwand und Anforderungen an das Material auf die notwendigen Festigkeiten auslegbar. Hierdurch muss unter Umständen die Gesamtmasse der Pendelmassen und damit die Effektivität der Drehschwingungsisolation verringert werden.

Aus der DE 10 2011 105 029 A1 ist ein Fliehkraftpendel mit den Merkmalen des Oberbegriffs des Anspruch 1 bekannt. Aufgabe der Erfindung ist daher, ein Fliehkraftpendel insbesondere für eine oder in einer Kupplungsscheibe vorzuschlagen, das bei einer großen Gesamtmasse der Pendelmassen einen ausreichenden Mindestquerschnitt zwischen Ausnehmungen der Laufbahnen und Durchführungen der Abstandshalter aufweist.

Die Aufgabe wird durch ein Fliehkraftpendel mit einem um eine Drehachse drehenden Pendelflansch und einer Mehrzahl gegenüber diesem entlang eines Schwingwinkels verschwenkbaren, beidseitig des Pendelflanschs angeordneten Pendelmassen gelöst, wobei jeweils axial gegenüber liegende Pendelmassen mittels den Pendelflansch durchgreifender Abstandshalter zu einem Pendelmassenpaar verbunden sind und der Schwingwinkel mittels jeweils zwei durch Laufbahnen in den Pendelmassen und in dem Pendelflansch sowie jeweils einem auf diesen abwälzenden Wälzkörper gebildeten Schwenklagern eingestellt ist und zwei symmetrisch zur Drehachse über den Umfang angeordnete, jeweils einen Winkel von größer 120°, bevorzugt größer ± 150° vorgesehen sind. Es hat sich dabei überraschend gezeigt, dass die Festigkeit des Fliehkraftpendels trotz gesteigerter Gesamtmasse der Pendelmassen erhöht werden kann, wenn eine höhere Belastung der Schwenklager aufgrund deren geringeren Anzahl in Kauf genommen wird und daher infolge der verminderten Anzahl der Schwenklager die Mindestquerschnitte zwischen den Ausnehmungen für die Laufbahnen und zur Durchführung der Abstandshalter vergrößert werden können. Die Schwingwinkel der beiden Pendelmassenpaare werden dabei so ausgelegt, dass diese annähernd einen halben Umfang, beispielsweise größer 170° und knapp unter 180° einnehmen. Je nach Ausbildung einer monofilaren oder bevorzugt bifilaren Schwingungsform hat es sich als vorteilhaft erwiesen, wenn sich die Pendelmassenpaare während gegenüber dem Pendelflansch auftretenden Schwingvorgängen nicht in Umfangsrichtung überschneiden. Dementsprechend sind die umfangsseitigen Stirnseiten der Pendelmassen zur Erhöhung der Masse entlang des Durchmessers des Fliehkraftpendels im Wesentlichen eben ausgebildet. Besonders vorteilhaft ist eine in Umfangsrichtung betrachtet parallel zu einem Durchmesser der Drehachse vorgesehene Ausbildung der Stirnseiten, so dass selbst bei gegenläufigen Schwingwinkeln der Pendelmassenpaare diese jeweils auf ihren Halbumfang begrenzt schwingen und damit einander nicht berühren können.

Es ist weiterhin vorgesehen, die effektive Gesamtmasse der Pendelmassen zu steigern, indem ein Verhältnis des Außendurchmessers des Pendelflansches und des Innendurchmessers der Pendelmassen größer gleich 1,4 vorgesehen ist.

Zur vorteilhaften Ausbildung der Ausnehmungen sind jeweils in Umfangsrichtung endseitig und mittig Abstandshalter in den Pendelmassenpaaren und zwischen den Abstandshaltern die Schwenklager angeordnet. Axial zwischen den Pendelmassen und dem Pendelflansch können Gleitstücke beispielsweise aus Kunststoff an den Pendelmassen und/oder dem Pendelflansch angeordnet sein. Weiterhin können die Abstandshalter Anschlagpuffer gegenüber den von diesen durchgriffenen Ausnehmungen aufweisen, wobei im Fliehkraftpendel während eines Normalbetriebs in vorteilhafter Weise insbesondere zur Vermeidung von Geräuschen keine Anschläge der Pendelmassenpaare an dem Pendelflansch vorgesehen sind, indem die Schwingwinkel dieser entsprechend ausgelegt sind.

Gemäß einer besonders bevorzugten Ausbildung des vorgeschlagenen Fliehkraftpendels ist dieses in einer Kupplungsscheibe einer Reibungskupplung angeordnet. Es hat sich hierbei als vorteilhaft gezeigt, wenn das Fliehkraftpendel axial benachbart zu einem Drehschwingungsdämpfer auf einer gemeinsamen Nabe und radial innerhalb der Reibbeläge der Kupplungsscheibe aufgenommen ist. Hierzu weist erfindungsgemäss der Pendelflansch eine Innenverzahnung zur drehfesten Aufnahme auf der Nabe auf. Zur Verbesserung des Verhältnisses der Masse des Pendelflansches zu der Gesamtmasse der Pendelmassen kann der Pendelflansch radial innerhalb der Ausnehmungen und unter Einhaltung von Mindestquerschnitten zu diesen weitere Ausnehmungen wie Durchbrüche aufweisen. In einer besonders bevorzugten Ausführungsform können die axial aus dem Drehschwingungsdämpfer austretenden Energiespeicher wie beispielsweise Schraubenfedern teilweise in diese Durchbrüche kontaktlos eingreifen, um axialen Bauraum der Kupplungsscheibe zu sparen.

Die Erfindung wird anhand des in den Figuren 1 bis 6 dargestellten Ausführungsbeispiels näher erläutert. Hierbei zeigen:
- Figur 1: eine 3D-Ansicht eines Fliehkraftpendels mit zwei Pendelmassenpaaren,
- Figur 2: eine geschnittene Ansicht des Fliehkraftpendels der Figur 1,
- Figur 3: einen Schnitt durch das Fliehkraftpendel der Figur 1,
- Figur 4: eine Ansicht des Fliehkraftpendels der Figur 1 bei maximalem Schwingwinkel,
- Figur 5: einen Schnitt durch das Fliehkraftpendel der Figur 1 entlang der Schnittlinie C-C der Figur 2
und
- Figur 6: einen Schnitt durch das Fliehkraftpendel der Figur 1 entlang der Schnittlinie X-X der Figur 2.

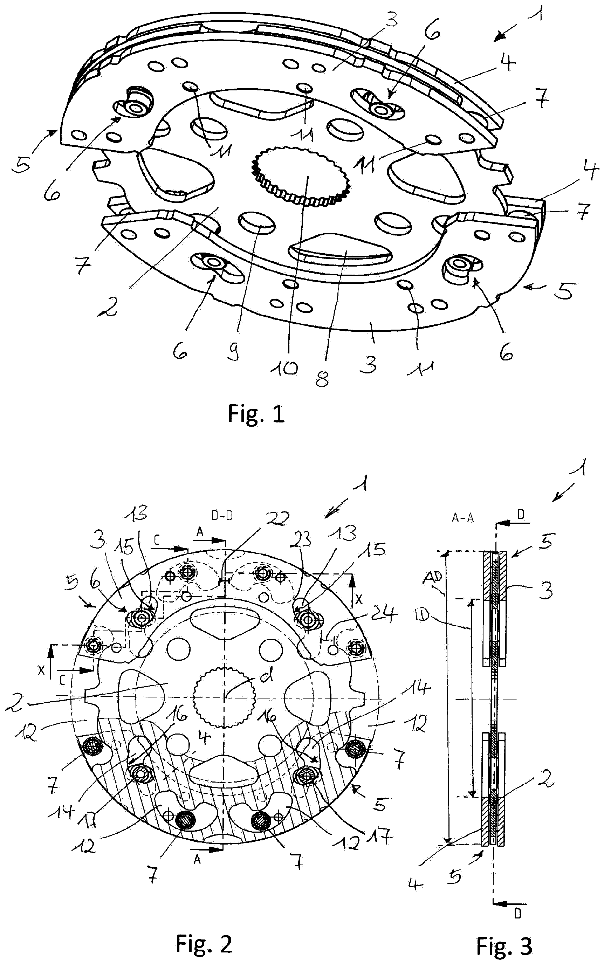

Die Figur 1 zeigt eine 3D-Ansicht des Fliehkraftpendels 1 mit dem Pendelflansch 2 und den beidseitig an diesem angeordneten Pendelmassen 3, 4. Die sich axial gegenüberliegenden Pendelmassen 3 und 4 bilden dabei jeweils ein Pendelmassenpaar 5, welches mittels der Schwenklager 6 gegenüber dem Pendelflansch 2 aufgenommen ist. Die Verbindung der Pendelmassen 3, 4 erfolgt mittels der Abstandshalter 7. Der Pendelflansch 2 weist neben den in den nachfolgenden Figuren einsehbaren Ausnehmungen für die Schwenklager 6 und die Abstandshalter 7 Durchbrüche 8, 9 beispielsweise zur Verringerung dessen Masse und eine zentrale Innenverzahnung 10 zur drehfesten Aufnahme auf einer Nabe beispielsweise einer Kupplungsscheibe oder auf einer Welle auf. Zur Vermeidung von harten Anschlägen beziehungsweise Einstellung eines geringen Abstands der Pendelmassen 3, 4 an dem Pendelflansch 2 sind an den Pendelmassen 3, 4 bevorzugt aus Kunststoff hergestellte Gleitkörper oder - wie hier dargestellt - eingedrückte Einformungen 11 vorgesehen.

Die Figuren 2 und 3 zeigen das um die Drehachse d drehende Fliehkraftpendel 1 im Detail. Hierbei zeigen die Figur 2 die Ansicht des Fliehkraftpendels 1 entlang der Linie D-D der Figur 3 und die Figur 3 den Schnitt entlang der Schnittlinie A-A der Figur 2. Die beiden Pendelmassenpaare 5 sind jeweils aus den als Gleichteile ausgebildeten Pendelmassen 3, 4 gebildet, welche mittels jeweils vier Abstandshaltern 7 miteinander verbunden sind. Um die Verschwenkbarkeit über den gesamten Schwingwinkel zu gewährleisten, durchgreifen die Abstandshalter 7 entsprechend ausgebildete Ausnehmungen 12 des Pendelflanschs 2.

Zur Bildung der Schwenklager 6 sind in den Pendelmassen 3, 4 Ausnehmungen 13 einerseits und in dem Pendelflansch Ausnehmungen 14 andererseits vorgesehen, an denen die Laufbahnen 15, 16 ausgebildet sind, an denen die Wälzkörper 17 abwälzen. Durch Ausbildung der Laufbahnen 15, 16 wird der sich abhängig von der Drehschwingungsbelastung des Pendelflansches einstellende Schwingwinkel der Pendelmassenpaare 5 gegenüber dem Pendelflansch vorgegeben. Die Pendelmassen 3, 4 sind jeweils bezogen auf die mit der Linie A-A zusammenfallenden Mittellinie symmetrisch ausgebildet.

Zur Ausbildung einer optimalen Einstellung der Gesamtmasse der Pendelmassen 3, 4 bei vorgegebenem Außendurchmesser AD des Fliehkraftpendels wird ein Verhältnis des Außendurchmessers AD zu einem Innendurchmesser ID der Pendelmassen 3, 4 bevorzugt größer 1,4 vorgesehen. Durch die lediglich zwei über den Umfang angeordneten Pendelmassenpaare 5 und die radial nach innen erweiterten Pendelmassen 3, 4 können die Mindestquerschnitte 22, 23, 24 zwischen den Ausnehmungen 12, 14 im Pendelflansch ausreichend weit ausgeführt werden, so dass die Festigkeit des Pendelflanschs 2 ausreichend ausgelegt und große Schwingwinkel vorgesehen werden können.

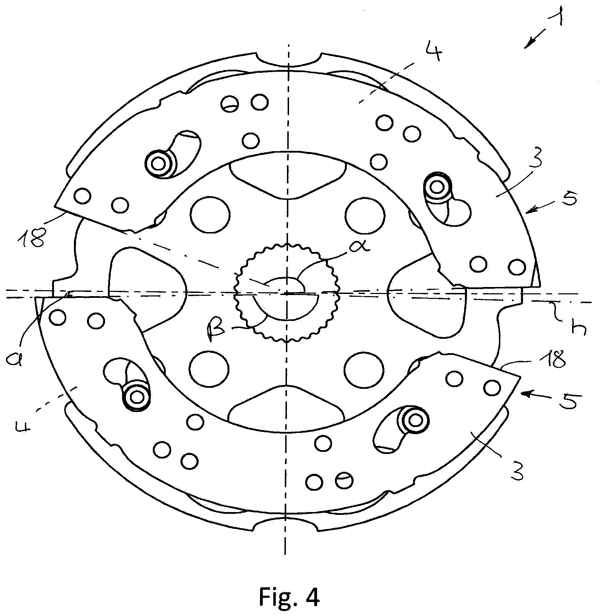

Die Figur 4 zeigt das Fliehkraftpendel 1 bei in eine erste Verschwenkrichtung maximal eingestelltem Schwingwinkel. Hierbei wird der Schwingwinkel in beide Verschwenkrichtungen der Pendelmassenpaare 5 so begrenzt, dass der überstrichene Winkel β der Pendelmassenpaare 5 knapp unter 180°, jedoch größer 170° ist. Hierdurch verbleibt jedes der beiden Pendelmassenpaare 5 in einer Pendelmassenhälfte. Die Stirnseiten 18 der Pendelmassenpaare können daher bei maximalem Schwingwinkel entlang des Durchmessers h beziehungsweise mit geringem Abstand a parallel zu diesem ausgebildet sein, um im Bereich der Stirnseiten den zur Verfügung stehenden Raum die Pendelmassen 3, 4 mit entsprechender Masse auszustatten. Eine Überlappung der Pendelmassen 3, 4 in Umfangsrichtung ist nicht vorgesehen. Die Erstreckung der Pendelmassen 3, 4 in Umfangsrichtung ergibt sich daraus abhängig von deren Schwingwinkel. Es hat sich dabei gezeigt, dass der Winkel α, über den sich die Pendelmassen 3, 4 über den Umfang erstrecken, größer 120° ist und bevorzugt im Bereich von 150° liegt.

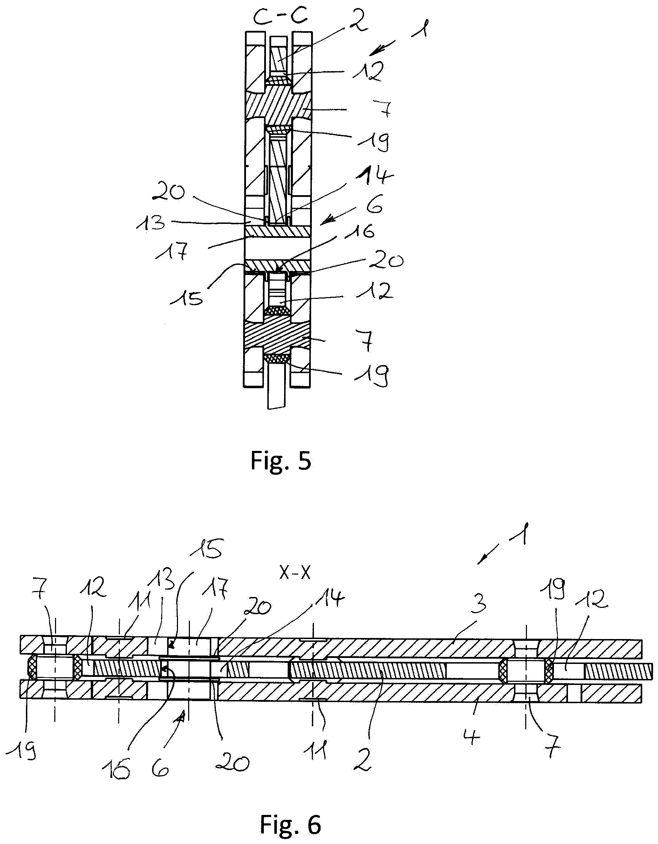

Die Figuren 5 und 6 zeigen jeweils Schnitte des Fliehkraftpendels 1 entlang den Schnittlinien C-C und X-X der Figur 2. Aus diesen Schnitten wird der Aufbau der mittigen und endseitigen Abstandshalter 7 deutlich, welche jeweils fest mit den Pendelmassenpaaren 3, 4 verbunden wie vernietet sind und die Ausnehmungen 12 des Pendelflanschs 2 durchgreifen. Zur Dämpfung von harten Anschlägen der Abstandshalter 7 an den Begrenzungen der Ausnehmungen 12 sind diese mit Anschlagpuffern 19 versehen. Weiterhin ist aus diesem Schnitt das Schwenklager 6 mit den Wälzkörpern 17 ersichtlich. Diese weisen beidseitig an dem Pendelflansch anliegende Ringborde 20 zur Zentrierung an dem Pendelflansch 2 auf und sind in dem gezeigten Ausführungsbeispiel hülsenförmig ausgebildet. Die Pendelmassen 3, 4 stützen sich dabei radial mittels der Laufbahnen 15, 16 der Ausnehmungen 13, 14 ab. Zur Stabilisierung der Pendelmassen 3, 4 gegenüber dem Pendelflansch 2 sind im Weiteren die Einformungen 11 vorgesehen, die den Spalt zwischen diesen verringern.

### Bezugszeichenliste

- 1: Fliehkraftpendel
- 2: Pendelflansch
- 3: Pendelmasse
- 4: Pendelmasse
- 5: Pendelmassenpaar
- 6: Schwenklager
- 7: Abstandshalter
- 8: Durchbruch
- 9: Durchbruch
- 10: Innenverzahnung
- 11: Einformung
- 12: Ausnehmung
- 13: Ausnehmung
- 14: Ausnehmung
- 15: Laufbahn
- 16: Laufbahn
- 17: Wälzkörper
- 18: Stirnseite
- 19: Anschlagpuffer
- 20: Ringbord
- 22: Mindestquerschnitt
- 23: Mindestquerschnitt
- 24: Mindestquerschnitt
- AD: Außendurchmesser
- ID: Innendurchmesser
- a: Abstand
- d: Drehachse
- h: Durchmesser
- A-A: Schnittlinie
- D-D: Linie
- C-C: Schnittlinie
- X-X: Schnittlinie
- α: Winkel
- β: Winkel

## Patentansprüche

1. Fliehkraftpendel (1) mit einem um eine Drehachse (d) drehenden Pendelflansch (2) und einer Mehrzahl gegenüber diesem entlang eines Schwingwinkels verschwenkbaren, beidseitig des Pendelflanschs (2) angeordneten Pendelmassen (3, 4), wobei jeweils axial gegenüber liegende Pendelmassen (3, 4) mittels den Pendelflansch (2) durchgreifender Abstandshalter (7) zu einem Pendelmassenpaar (5) verbunden sind und der Schwingwinkel mittels jeweils zwei durch Laufbahnen (15, 16) in den Pendelmassen (3, 4) und in dem Pendelflansch (2) sowie jeweils einem auf diesen abwälzenden Wälzkörper (17) gebildeten Schwenklagern (6) eingestellt ist, wobei zwei symmetrisch zur Drehachse (d) über den Umfang angeordnete, jeweils einen Winkel (β) von größer 120° des Umfangs einnehmende Pendelmassenpaare (5) vorgesehen sind, **dadurch gekennzeichnet, dass** der Pendelflansch (2) eine Innenverzahnung (10) zur drehfesten Aufnahme an einer Kupplungsscheibe aufweist, wobei das Fliehkraftpendel (1) axial benachbart zu einem Drehschwingungsdämpfer auf einer gemeinsamen Nabe und radial innerhalb der Reibbeläge der Kupplungsscheibe aufnehmbar ist.

2. Fliehkraftpendel (1) nach Anspruch 1, **dadurch gekennzeichnet, dass** der Winkel (β) größer ± 150° ist.

3. Fliehkraftpendel (1) nach Anspruch 1 oder 2, **dadurch gekennzeichnet, dass** ein entlang des Schwingwinkels von den Pendelmassenpaaren überstrichener Winkel (α) größer 170° ist.

4. Fliehkraftpendel (1) nach einem der Ansprüche 1 bis 3, **dadurch gekennzeichnet, dass** die Pendelmassen (3, 4) in Umfangsrichtung betrachtet parallel zu einem Durchmesser (h) der Drehachse ausgebildete Stirnseiten (18) aufweisen.

5. Fliehkraftpendel (1) nach einem der Ansprüche 1 bis 4, **dadurch gekennzeichnet, dass** ein Verhältnis des Außendurchmessers (AD) des Pendelflansches (2) und des Innendurchmessers (ID) der Pendelmassen (3, 4) größer gleich 1,4 ist.

6. Fliehkraftpendel (1) nach einem der Ansprüche 1 bis 5, **dadurch gekennzeichnet, dass** jeweils in Umfangsrichtung endseitig und mittig Abstandshalter (7) in den Pendelmassenpaaren (5) angeordnet sind.

7. Fliehkraftpendel (1) nach Anspruch 6, **dadurch gekennzeichnet, dass** zwischen zwei Abstandshaltern (7) jeweils ein Schwenklager (6) angeordnet ist.

8. Fliehkraftpendel (1) nach einem der Ansprüche 1 bis 7, **dadurch gekennzeichnet, dass** in dem Pendelflansch (2) vorgesehene Ausnehmungen (12, 14) für die Abstandshalter (7) und die Wälzkörper (17) mit einem Mindestquerschnitt (22, 23, 24) voneinander getrennt sind.

## Claims

1. Centrifugal pendulum (1) having a pendulum flange (2) which rotates about an axis of rotation (d) and having a multiplicity of pendulum masses (3, 4) which are pivotable relative to said pendulum flange along an oscillation angle and which are arranged to both sides of the pendulum flange (2), wherein respectively axially oppositely situated pendulum masses (3, 4) are connected to form a pendulum mass pair (5) by means of spacers (7) which extend through the pendulum flange (2), and the oscillation angle is set by means of in each case two pivot bearings (6) formed by raceways (15, 16) in the pendulum masses (3, 4) and in the pendulum flange (2) and in each case one rolling body (17) which rolls on said raceways, wherein two pendulum mass pairs (5) are provided which are arranged over the circumference symmetrically with respect to the axis of rotation (d) and which in each case enclose an angle (β) of greater than 120° of the circumference, **characterized in that** the pendulum flange (2) has an internal toothing (10) for being received rotationally conjointly on a clutch disk, wherein the centrifugal pendulum (1) can be received, axially adjacent to a rotary vibration damper, on a common hub and radially within the friction linings of the clutch disk.

2. Centrifugal pendulum (1) according to Claim 1, **characterized in that** the angle (β) is greater than ± 150°.

3. Centrifugal pendulum (1) according to Claim 1 or 2, **characterized in that** an angle (α) covered by the pendulum mass pairs along the oscillation angle is greater than 170°.

4. Centrifugal pendulum (1) according to any of Claims 1 to 3, **characterized in that** the pendulum masses (3, 4), viewed in a circumferential direction, have face sides (18) formed parallel to a diameter (h) of the axis of rotation.

5. Centrifugal pendulum (1) according to any of Claims 1 to 4, **characterized in that** a ratio of the outer diameter (AD) of the pendulum flange (2) and of the inner diameter (ID) of the pendulum masses (3, 4) is greater than or equal to 1.4.

6. Centrifugal pendulum (1) according to any of Claims 1 to 5, **characterized in that** spacers (7) are arranged in the pendulum mass pairs (5) in each case at an end side and centrally in a circumferential direction.

7. Centrifugal pendulum (1) according to Claim 6, **characterized in that** in each case one pivot bearing (6) is arranged between two spacers (7).

8. Centrifugal pendulum (1) according to any of Claims 1 to 7, **characterized in that** recesses (12, 14) provided in the pendulum flange (2) for the spacers (7) and the rolling bodies (17) are separated from one another with a minimum cross section (22, 23, 24).

## Revendications

1. Pendule à force centrifuge (1) comprenant une bride de pendule (2) tournant autour d'un axe de rotation (d) et une pluralité de masses pendulaires (3, 4) disposées des deux côtés de la bride de pendule (2), pouvant pivoter par rapport à celle-ci le long d'un angle d'oscillation, des éléments d'espacement (7) s'engageant à chaque fois axialement au moyen de la bride de pendule (2) par rapport à des masses pendulaires couchées (3, 4) étant assemblés pour former une paire de masses pendulaires (5) et l'angle d'oscillation étant ajusté à chaque fois au moyen de deux paliers pivotants (6) formés par des chemins de roulement (15, 16) dans les masses pendulaires (3, 4) et dans la bride de pendule (2), ainsi qu'à chaque fois par un corps de roulement (17) roulant sur ces chemins de roulement, deux paires de masses pendulaires (5) disposées symétriquement par rapport à l'axe de rotation (d) sur la périphérie, formant à chaque fois un angle (β) supérieur à 120° de la périphérie, étant prévues, **caractérisé en ce que**
la bride de pendule (2) présente une denture intérieure (10) pour être reçue de manière solidaire en rotation sur un disque d'embrayage, le pendule à force centrifuge (1) pouvant être reçu axialement à côté d'un amortisseur des oscillations de torsion sur un moyeu commun et radialement à l'intérieur des garnitures de friction du disque d'embrayage.

2. Pendule à force centrifuge (1) selon la revendication 1, **caractérisé en ce que** l'angle (β) est supérieur à ±150°.

3. Pendule à force centrifuge (1) selon la revendication 1 ou 2, **caractérisé en ce qu'**un angle (α) balayé le long de l'angle d'oscillation par les paires de masses pendulaires est supérieur à 170°.

4. Pendule à force centrifuge (1) selon l'une quelconque des revendications 1 à 3, **caractérisé en ce que** les masses pendulaires (3, 4), vues dans la direction périphérique, présentent des côtés frontaux (18) réalisés parallèlement à un diamètre (h) de l'axe de rotation.

5. Pendule à force centrifuge (1) selon l'une quelconque des revendications 1 à 4, **caractérisé en ce qu'**un rapport du diamètre extérieur (AD) de la bride de pendule (2) et du diamètre intérieur (ID) des masses pendulaires (3, 4) est supérieur ou égal à 1,4.

6. Pendule à force centrifuge (1) selon l'une quelconque des revendications 1 à 5, **caractérisé en ce que** des éléments d'espacement (7) sont disposés dans les paires de masses pendulaires (5) à chaque fois dans la direction périphérique du côté de l'extrémité et centralement.

7. Pendule à force centrifuge (1) selon la revendication 6, **caractérisé en ce qu'**entre deux éléments d'espacement (7) est à chaque fois disposé un palier pivotant (6).

8. Pendule à force centrifuge (1) selon l'une quelconque des revendications 1 à 7, **caractérisé en ce que** des évidements (12, 14) prévus dans la bride de pendule (2) pour les éléments d'espacement (7) et les corps de roulement (17) sont séparés les uns des autres par une section transversale minimale (22, 23, 24).
